# EUROPEAN PATENT SPECIFICATION

(11) **EP 4 063 632 B1**
(45) Date of publication and mention of the grant of the patent: **28.02.2024**
(21) Application number: 22159585.3
(22) Date of filing: 02.03.2022
(51) Int. Cl.: F02C 7/228, F02C 7/232, F23R 3/34

(54) **BURNER HEAD**
BRENNERKOPF
TÊTE DE BRÛLEUR

(30) Priority: 26.03.2021 GB 202104283
(43) Date of publication of application: 28.09.2022
(73) Proprietor: Rolls-Royce plc, London N1 9FX (GB)
(72) Inventor: Bellis, Mark, Derby, DE24 8BJ (GB)
(74) Representative: Rolls-Royce plc

(56) References cited:
- DE-A1-102018 123 785
- US-A1- 2007 186 557
- US-A1- 2012 324 895
- US-A1- 2015 204 239
- US-A1- 2017 284 671

## Description

### FIELD

The present invention relates to a burner head for a fuel manifold, a fuel manifold for a gas turbine engine, and a gas turbine engine.

### BACKGROUND

Multi-stage combustors are used particularly in lean burn fuel systems of gas turbine engines to reduce unwanted emissions while maintaining thermal efficiency and flame stability. For example, duplex fuel injectors have pilot and mains fuel manifolds feeding pilot and mains discharge orifices of the injectors. At low power conditions only the pilot stage is activated, while at higher power conditions both pilot and mains stages are activated. The fuel for the manifolds typically derives from a pumped and metered supply. In the case of the pilot and mains stages being supplied by separate fuel manifolds, a splitter valve can then be provided to selectively split the metered fuel supply between the manifolds as required for a given staging.

A typical annular combustor has a circumferential arrangement of burner heads, each associated with respective pilot and mains feeds extending from the circumferentially extending pilot and mains manifolds. Each burner head generally has a nozzle forming the fuel injectors which discharge fuel into the combustion chamber of the combustor, a feed arm for the transport of fuel to the burner head, and a junction at the outside of the combustor at which the pilot and mains feeds enter the feed arm. Within the nozzle, a check valve, known as a flow scheduling valve (FSV), is typically associated with each of the pilot and mains feeds in order to retain a primed manifold when de-staged and at shut-down. The FSVs also prevent fuel flow into the injector nozzle when the supply pressure is less than the cracking pressure (i.e. less than a given difference between manifold pressure and combustor gas pressure required to open the FSV).

During pilot-only operation, the splitter valve directs fuel for burner flow only through the pilot fuel circuit (i.e. pilot manifold and feeds). It is therefore conventional to control temperatures in the de-staged (i.e. mains) fuel circuit to prevent coking due to heat pick up from the hot engine casing. One known approach, for example, is to provide a separate recirculation manifold which is used to keep the fuel in the mains manifold cool when it is deselected. It does this by keeping the fuel in the mains manifold moving, although a cooling flow also has to be maintained in the recirculation manifold during mains operation to avoid coking.

However, a problem with such a system is how to accommodate a mains FSV failing to an open condition. In pilot-only operation, when cooling flow is passing through the recirculation manifold and the mains manifold, such a failure can result in the cooling flow passing through the failed open FSV and through one mains injector into the combustors, causing a hot streak which may lead to nozzle and turbine damage. In pilot and mains operation, such a failure can produce a drop in mains manifold pressure which causes other mains FSVs on the mains manifold to close. A possible outcome is again that a high proportion of the total mains flow passes through the failed open FSV to one injector, causing a hot streak leading to nozzle and turbine damage.

In principle, such failure modes can be detected by appropriate thermocouple arrangements, e.g. to detect hot streaks. However, temperature measurement devices of this type can themselves have reliability issues.

United Kingdom patent application GB 2557601 A describes a fuel supply system having separate pilot and mains fuel manifolds, each delivering fuel to the pilot and mains fuel injectors respectively. A splitter valve can be used to control the amount of fuel being delivered to each manifold.

United States patent US 7036302 B2 describes a fuel nozzle comprising mains and pilot fuel nozzle valves connected to a single fuel supply manifold. Both valves are biased by springs and controlled by the pressure difference between a signal circuit and the fuel supply manifold pressure. In the event of the spring in either valve failing, there is nothing to prevent fuel flowing through the associated nozzle valve.

German patent application DE 102018123785 A1 describes a gas turbine arrangement and a method of operating the gas turbine arrangement, wherein fuel supply to a burner-specific section is controlled by an isolation valve, with the fuel line conduit to the pilot burner also including a cross-sectional reduction in order to ensure a minimum flow of fuel to the pilot stage.

United States patent application US 2017/284671 A1 describes a gas turbine combustor having an isolation valve and fuel control valves arranged in series to control the flow of fuel to a burner part.

It would be desirable to address the disadvantages of the prior art, and provide a fuel manifold arrangement that allowed for accurate control of the fuel flow to the fuel injectors whilst reducing the possibility of undesired fuel leaks into the combustion chamber.

### SUMMARY

In a first aspect there is provided a burner head for a fuel manifold as set out in claim 1.

Such a burner achieves improved functionality compared with the burner heads of the prior art, whilst reducing the risk of damage to the engine from known failure modes.

The burner head is provided with a second isolation valve. The addition of a second isolation valve means the burner head cannot release fuel to the mains fuel injector unless fuel is already flowing to the pilot fuel injector. It also means the fuel flow to the mains fuel injector can be shut off completely, even when there is fuel flowing to the pilot fuel injector.

The first and second isolation valves can be controlled by solenoids, and the staging valve can be controlled by an electric motor. Alternatively, the first and second isolation valves and the staging valve can be pressure valves.

The burner head can be provided with a valve control module connected to the first and second isolation valves and the staging valve. The valve control module allows a reduction in the number of harness cables required for the control function, and hence a reduction in system weight and drive complexity.

The force required to open the first isolation valve of the burner head is different to the force required to open the second isolation valve. The force required to open the first isolation valve can be less than the force required to open the second isolation valve. A single spring can be used to provide different forces against the first and second isolation valves.

In a second aspect there is provided a fuel manifold for a gas turbine engine comprising one or more burner heads of the first aspect.

In a third aspect there is provided a gas turbine engine comprising a fuel manifold comprising one or more burner heads of the first aspect.

### BRIEF DESCRIPTION OF THE DRAWINGS

Embodiments will now be described by way of example only, with reference to the Figures, in which:
**Figure 1** is a sectional side view of a gas turbine engine;
**Figure 2** is a close up sectional side view of an upstream portion of the gas turbine engine shown in Figure 1;
**Figure 3** is a partially cut-away view of a gearbox for the gas turbine engine shown in Figures 1 and 2;
**Figure 4** shows a schematic illustration of a fuel manifold according to an embodiment of the present invention;
**Figure 5** shows a schematic illustration of an unclaimed burner head arrangement according to a first embodiment of the present invention;
**Figure 6** shows a schematic illustration of an unclaimed alternative burner head arrangement according to the first embodiment of the present invention;
**Figure 7** shows a schematic illustration of a second unclaimed alternative burner head arrangement according to the first embodiment of the present invention;
**Figure 8** shows a schematic illustration of an unclaimed burner head according to a second embodiment of the present invention;
**Figure 9** shows a schematic illustration of an alternative burner head according to the second embodiment of the present invention;
**Figure 10** shows a schematic illustration of a burner head according to a third embodiment of the present invention;
**Figure 11** shows a schematic illustration of an alternative burner head according to the third embodiment of the present invention;
**Figure 12** shows a schematic illustration of a burner head according to a fourth embodiment of the present invention;
**Figure 13** shows a schematic illustration of a second alternative burner head according to the third embodiment of the present invention;
**Figure 14** shows and a schematic illustration of an unclaimed burner head according to a fifth embodiment of the present invention; and
**Figure 15** shows a schematic illustration of an unclaimed burner head according to a sixth embodiment of the present invention.

### DETAILED DESCRIPTION

Aspects and embodiments of the present invention will now be discussed with reference to the accompanying figures. Further aspects and embodiments will be apparent to those skilled in the art.

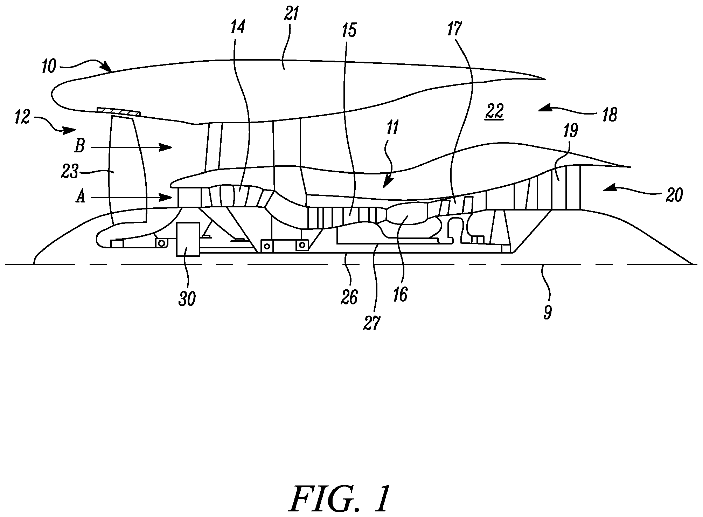

**Figure 1** illustrates a gas turbine engine 10 having a principal rotational axis 9. The engine 10 comprises an air intake 12 and a propulsive fan 23 that generates two airflows: a core airflow A and a bypass airflow B. The gas turbine engine 10 comprises an engine core 11 that receives the core airflow A. The engine core 11 comprises, in axial flow series, a low-pressure compressor 14, a high-pressure compressor 15, combustion equipment 16, a high-pressure turbine 17, a low-pressure turbine 19 and a core exhaust nozzle 20. A nacelle 21 surrounds the gas turbine engine 10 and defines a bypass duct 22 and a bypass exhaust nozzle 18. The bypass airflow B flows through the bypass duct 22. The fan 23 is attached to and driven by the low-pressure turbine 19 via a shaft 26 and an epicyclic gearbox 30.

In use, the core airflow A is accelerated and compressed by the low-pressure compressor 14 and directed into the high-pressure compressor 15 where further compression takes place. The compressed air exhausted from the high-pressure compressor 15 is directed into the combustion equipment 16 where it is mixed with fuel and the mixture is combusted. The resultant hot combustion products then expand through, and thereby drive, the high pressure and low-pressure turbines 17, 19 before being exhausted through the core exhaust nozzle 20 to provide some propulsive thrust. The high-pressure turbine 17 drives the high-pressure compressor 15 by a suitable interconnecting shaft 27. The fan 23 generally provides the majority of the propulsive thrust. The epicyclic gearbox 30 is a reduction gearbox.

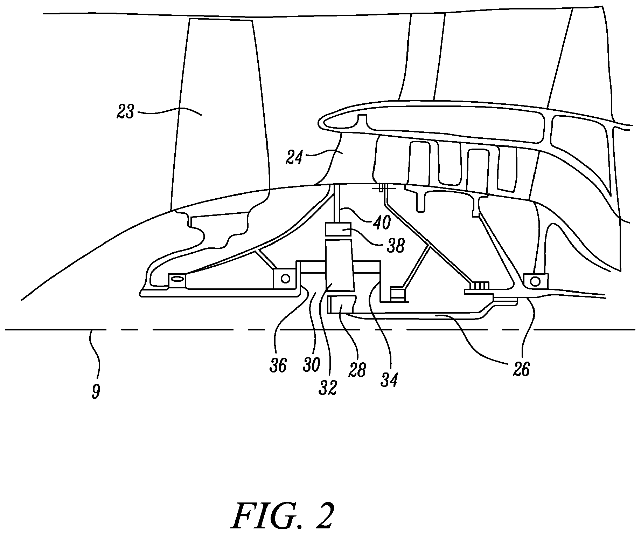

An exemplary arrangement for a geared fan gas turbine engine 10 is shown in **Figure 2****.** The low-pressure turbine 19 (see Figure 1) drives the shaft 26, which is coupled to a sun wheel, or sun gear, 28 of the epicyclic gear arrangement 30. Radially outwardly of the sun gear 28 and intermeshing therewith is a plurality of planet gears 32 that are coupled together by a planet carrier 34. The planet carrier 34 constrains the planet gears 32 to precess around the sun gear 28 in synchronicity whilst enabling each planet gear 32 to rotate about its own axis. The planet carrier 34 is coupled via linkages 36 to the fan 23 in order to drive its rotation about the engine axis 9. Radially outwardly of the planet gears 32 and intermeshing therewith is an annulus or ring gear 38 that is coupled, via linkages 40, to a stationary supporting structure 24.

Note that the terms "low-pressure turbine" and "low-pressure compressor" as used herein may be taken to mean the lowest pressure turbine stages and lowest pressure compressor stages (i.e. not including the fan 23) respectively and/or the turbine and compressor stages that are connected together by the interconnecting shaft 27 with the lowest rotational speed in the engine (i.e. not including the gearbox output shaft that drives the fan 23). In some literature, the "low-pressure turbine" and "low-pressure compressor" referred to herein may alternatively be known as the "intermediate pressure turbine" and "intermediate pressure compressor". Where such alternative nomenclature is used, the fan 23 may be referred to as a first, or lowest pressure, compression stage.

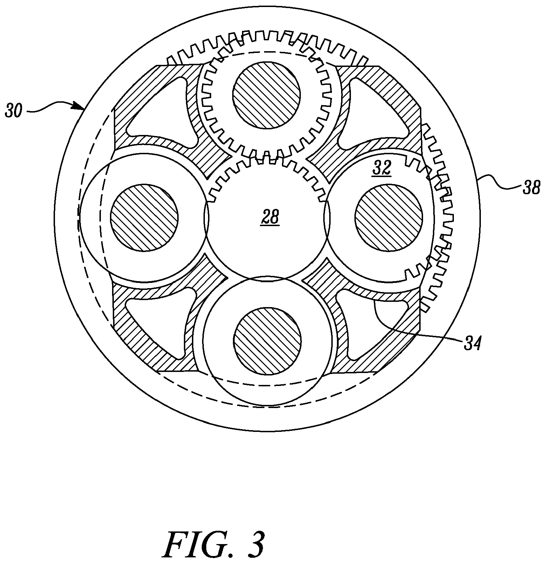

The epicyclic gearbox 30 is shown by way of example in greater detail in **Figure 3****.** Each of the sun gear 28, planet gears 32 and ring gear 38 comprise teeth about their periphery to intermesh with the other gears. However, for clarity only exemplary portions of the teeth are illustrated in Figure 3. There are four planet gears 32 illustrated, although it will be apparent to the skilled reader that more or fewer planet gears 32 may be provided. Practical applications of a planetary epicyclic gearbox 30 generally comprise at least three planet gears 32.

The epicyclic gearbox 30 illustrated by way of example in Figures 2 and 3 is of the planetary type, in that the planet carrier 34 is coupled to an output shaft via linkages 36, with the ring gear 38 fixed. However, any other suitable type of epicyclic gearbox 30 may be used. By way of further example, the epicyclic gearbox 30 may be a star arrangement, in which the planet carrier 34 is held fixed, with the ring (or annulus) gear 38 allowed to rotate. In such an arrangement the fan 23 is driven by the ring gear 38. By way of further alternative example, the gearbox 30 may be a differential gearbox in which the ring gear 38 and the planet carrier 34 are both allowed to rotate.

It will be appreciated that the arrangement shown in Figures 2 and 3 is by way of example only. Purely by way of example, any suitable arrangement may be used for locating the gearbox 30 in the engine 10 and/or for connecting the gearbox 30 to the engine 10. By way of further example, the connections (such as the linkages 36, 40 in the Figure 2 example) between the gearbox 30 and other parts of the engine 10 (such as the input shaft 26, the output shaft and the fixed structure 24) may have any desired degree of stiffness or flexibility. By way of further example, any suitable arrangement of the bearings between rotating and stationary parts of the engine (for example between the input and output shafts from the gearbox and the fixed structures, such as the gearbox casing) may be used, and the disclosure is not limited to the exemplary arrangement of Figure 2. For example, where the gearbox 30 has a star arrangement (described above), the skilled person would readily understand that the arrangement of output and support linkages and bearing locations would typically be different to that shown by way of example in Figure 2.

Accordingly, the present invention extends to a gas turbine engine having any arrangement of gearbox styles (for example star or planetary), support structures, input and output shaft arrangement, and bearing locations.

Optionally, the gearbox may drive additional and/or alternative components (e.g. the intermediate pressure compressor and/or a booster compressor).

Other gas turbine engines to which the present invention may be applied may have alternative configurations. For example, such engines may have an alternative number of compressors and/or turbines and/or an alternative number of interconnecting shafts. By way of further example, the gas turbine engine shown in Figure 1 has a split flow nozzle 18, 20 meaning that the flow through the bypass duct 22 has its own nozzle 18 that is separate to and radially outside the core exhaust nozzle 20. However, this is not limiting, and any aspect of the present invention may also apply to engines in which the flow through the bypass duct 22 and the flow through the core 11 are mixed, or combined, before (or upstream of) a single nozzle, which may be referred to as a mixed flow nozzle. One or both nozzles (whether mixed or split flow) may have a fixed or variable area. Whilst the described example relates to a turbofan engine, the invention may apply, for example, to any type of gas turbine engine, such as an open rotor (in which the fan stage is not surrounded by a nacelle) or turboprop engine, for example. In some arrangements, the gas turbine engine 10 may not comprise a gearbox 30.

The geometry of the gas turbine engine 10, and components thereof, is defined by a conventional axis system, comprising an axial direction (which is aligned with the rotational axis 9), a radial direction (in the bottom-to-top direction in Figure 1), and a circumferential direction (perpendicular to the page in the Figure 1 view). The axial, radial and circumferential directions are mutually perpendicular.

Turning now more specifically to the burner head of the present invention that may, for example, be used in a gas turbine such as a geared turbofan engine as described above.

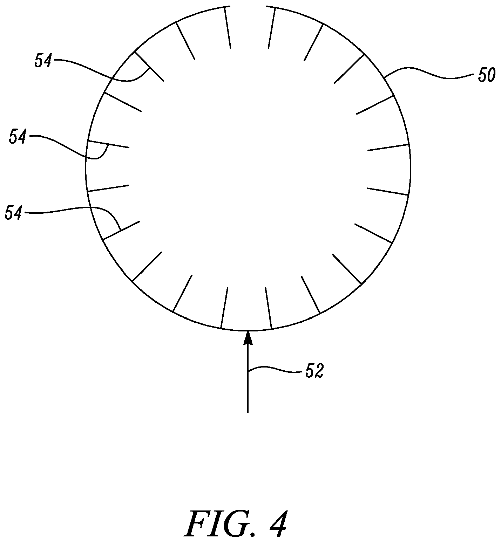

**Figure 4** shows a basic arrangement of a fuel manifold 50 compatible with any of the embodiments described herein. The fuel manifold has a ring configuration suitable for positioning around the periphery of a gas turbine engine combustor section 16. There is a fuel source 52 to the manifold, and at a number of points around the manifold inward extensions protrude which terminate in burner heads 54 such as those described herein. It should be noted that the arrangement shown in Figure 4 is purely illustrative, and that other arrangements of burner heads are possible. For example, the burner heads may extend axially away from the manifold, so that they would be pointing out of the plane in which the fuel manifold is situated, or extending away from the manifold at some intermediate angle which provides a suitable location for the injection of fuel into a core zone of the combustor. As such, the fuel manifold provides a source of fuel for each of the burner heads. The burner heads of the manifold do not all have to be of the same design. Indeed, in some cases it may be advantageous to have burner heads according to different designs at different locations around the fuel manifold. Alternative arrangements of manifolds are possible, and one or more manifolds according to the present invention may be used within a single gas turbine engine.

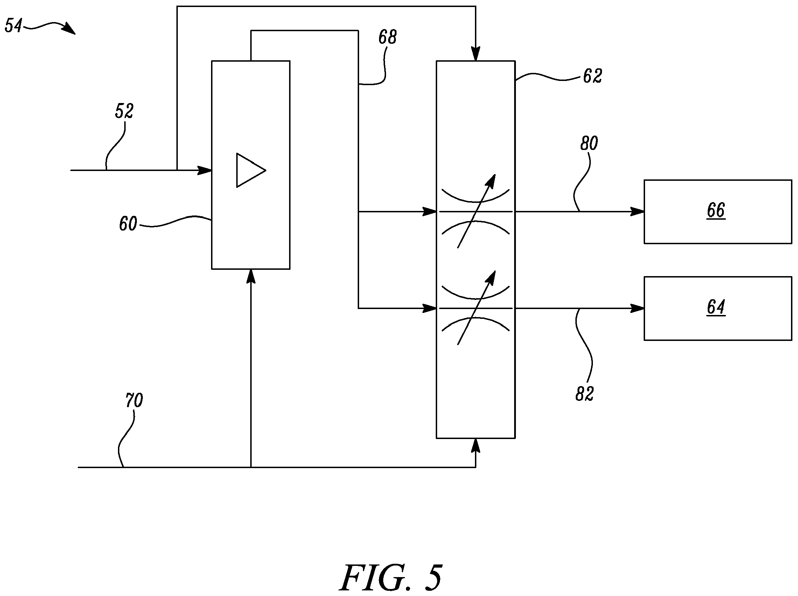

**Figure 5** shows an unclaimed first embodiment of the burner head 54 arrangement of the invention. The burner head has an isolation valve 60 and a staging valve 62 arranged in series. In fuel flow order, the first valve is the isolation valve 60 and the second valve is a staging valve 62. The purpose of the isolation valve is to provide a flow control mechanism which can be opened to allow fuel from the fuel source 52 to flow to the staging valve 62, or closed in a liquid-tight fashion to prevent fuel from flowing to the staging valve. For example, the isolation valve 60 may only have two states: open so that fuel can flow through the isolation valve, and closed so that fuel cannot flow through the isolation valve. Alternatively, it may have three states: open so that fuel can flow only to the pilot fuel injector 64; open so that fuel can flow to the pilot 64 and mains 66 fuel injectors; and closed so that fuel cannot flow to either of the pilot or mains fuel injectors. The purpose of the staging valve is to control the ratio of fuel flowing to the pilot fuel and mains fuel injectors. The optimum ratio is determined based on various factors known in the art, such as ambient temperature and mission stage (e.g. take-off, climb, cruise, etc.).

The isolation valve 60 receives a fuel flow from a fuel source 52 and sends it to the staging valve 62 via an inter-valve connection 68. In the embodiment of Figure 5, the position of the isolation valve 60 is governed by a control flow from a control manifold 70. The fuel manifold 50 supplies fuel for burning and also fuel pressure to assist in closing the isolation valve 60 and staging valve 62. The control manifold 70 provides fuel pressure pushing the isolation valve 60 towards its open position. The control manifold also pressures the staging valve towards opening the mains flow to the mains fuel injector 66. The basis for controlling the positions of the valves is the difference between pressure from the control manifold and the pressure from the fuel manifold.

For example, the isolation valve can comprise a spring (not shown) which by default acts to keep the isolation valve 60 closed. The fuel source manifold 52 sets a default pressure level which, in addition to the force of the spring, the pressure of fuel from the control manifold 70 must overcome in order to open the isolation valve 60. The use of pressure control to control the position of fuel valves is well known in the art. The pressure control method optionally includes the measurement of differential pressure between the fuel source and the control manifold, which may also be supplied by the fuel source.

When the isolation valve 60 opens to the inter-valve connection 68, the staging valve 62 receives fuel from the isolation valve through the inter-valve connection. In the embodiment of Figure 5, the inter-valve connection has a split, such that fuel flow is divided into a pilot flow for the pilot fuel injector 64 and a mains flow for a mains fuel injector 66. The staging valve 62 controls the flow of fuel to the pilot fuel and the mains fuel injectors. The position of the staging valve 62, and therefore the flow of fuel to the pilot and mains fuel injectors, can be controlled by the fluid pressure from the control manifold 70, which pushes to open the staging valve. Against this, the spring (if present) within the staging valve 62, along with a portion of the fuel source 52 flow pressure, push to close the valve. Dynamic seals separate the control pressure, pilot staging, mains staging and fuel source flow regions.

As shown in Figure 5, the control flows to the isolation 60 and staging 62 valves of a given burner may be from the same control manifold 70. One or more control flows may control the isolation and staging valves of different groups of burner heads 54 on the manifold 50.

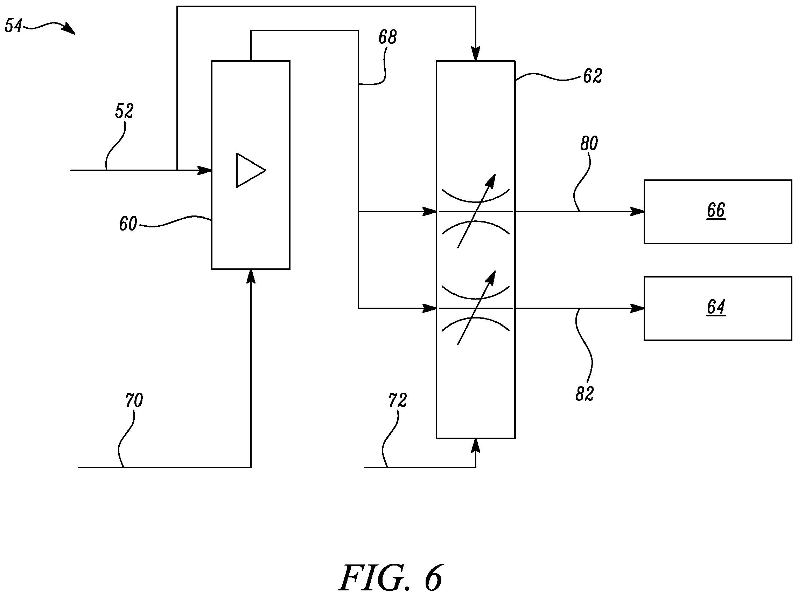

**Figure 6** shows an unclaimed alternative embodiment where the isolation valve 60 and staging valve 62 of a given burner head 54 are controlled by different control flow sources. A first control manifold 70 supplies pressure to the isolation valve 60, and a second control manifold 72 supplies pressure to the staging valve 62. The control of isolation valves 60 and staging valves 62 of different groups of burner heads 54 may be mixed between the same or different control flow sources 70, 72 in order to provide the greatest advantage in engine operability across the flight envelope, operating conditions and weather conditions.

Importantly, with respect to each of the embodiments described herein, by having the isolation and staging valves 60, 62 in series, should either valve fail it is still possible to apply a degree of control to the fuel flow through the burner head 54. Prior art designs use parallel manifolds to supply fuel to the mains and pilot fuel injectors, with each manifold having a single isolation or staging valve to control flow into the manifold. Staging or scheduling valves at the burner heads then control the fuel flow to the mains and pilot fuel injectors. In such prior art designs, if a staging or scheduling valve in the burner head failed, there was no way to control the flow of fuel to the mains and/or pilot fuel injectors for that burner head without shutting off fuel to the entire manifold. By comparison, the burner head designs shown here have mitigated this potential issue. In the event of a staging valve failure, the isolation valve can be used to shut off fuel flow to all or part of the affected burner head only. Equally, in the event an isolation valve should fail, only a single burner head is affected, and the staging valve can still be used to control any residual flow through the burner head. Therefore, the consequences of any such failure are greatly reduced by comparison to the prior art; there is minimal risk of an undesired increase in fuel flow during engine operation, and the risk of excessive fuel flow to a single burner is all but eliminated.

It will be apparent that the embodiments described herein may be applied either to a whole fuel system of a gas turbine engine or to any part of a system comprising at least one group of burner heads. For example, in a particular engine design it may be advantageous to operate some burners all the time whilst other burners may be switched in at particular operating conditions. This may facilitate patterns of burner operation in an engine of any size or dimension.

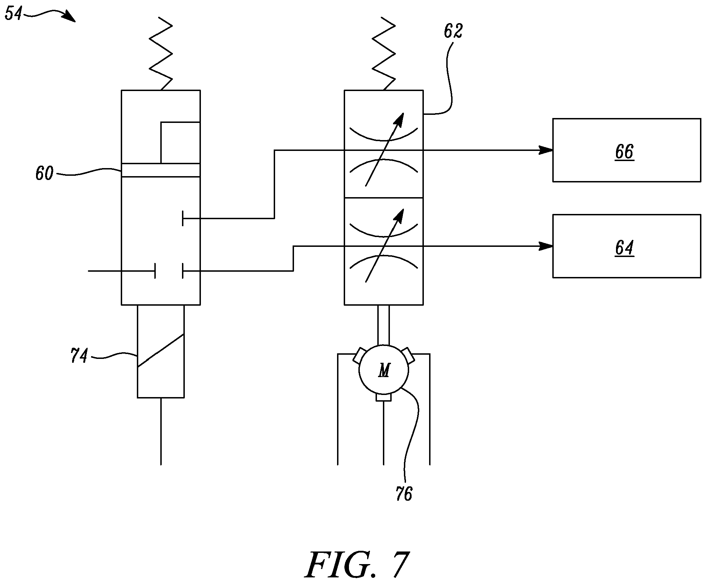

**Figure 7** shows an unclaimed second alternative version of the first embodiment, the only difference being that the isolation 60 and staging 62 valves are controlled electronically instead of via pressure control. In this embodiment, the isolation valve 60 is controlled by a solenoid 74, and the staging valve 62 is controlled by an electric motor 76.

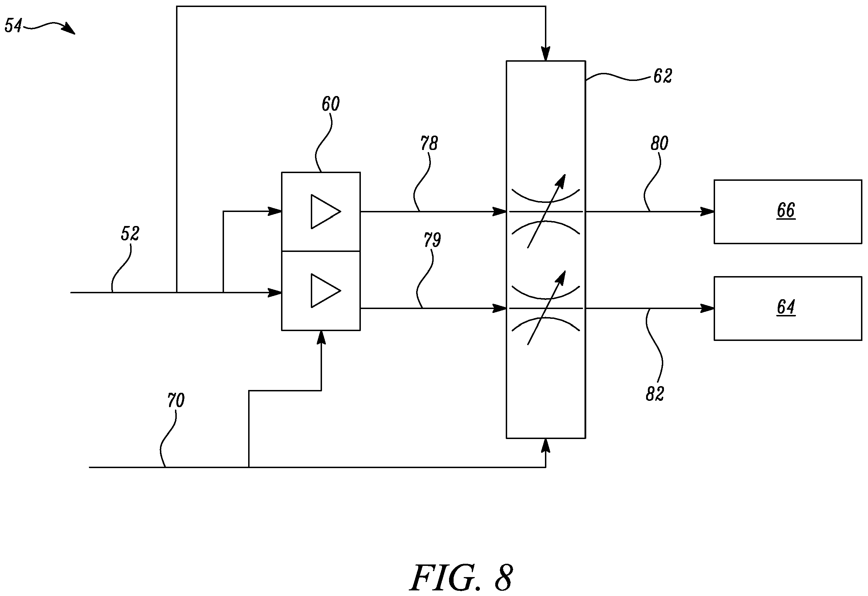

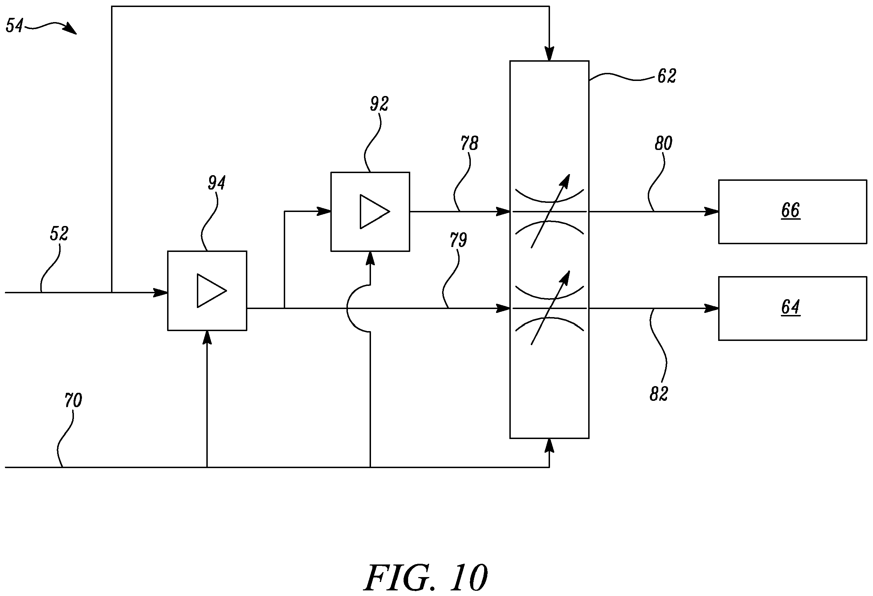

In an unclaimed second embodiment, shown in **Figure 8****,** there are separate inter-valve connections 78, 79 between the isolation valve 60 and the staging valve 62; a first inter-valve connection 78 connects the isolation valve 60 to the mains fuel conduit 80 of the staging valve, and a second inter-valve connection 79 connects the isolation valve 60 to the pilot fuel conduit 82 of the staging valve 62. As shown, these isolation functions are co-located in the same isolation valve 60, but it is equally possible to have the pilot and mains isolation functions located in separate valves, as shown in Figure 10, for example.

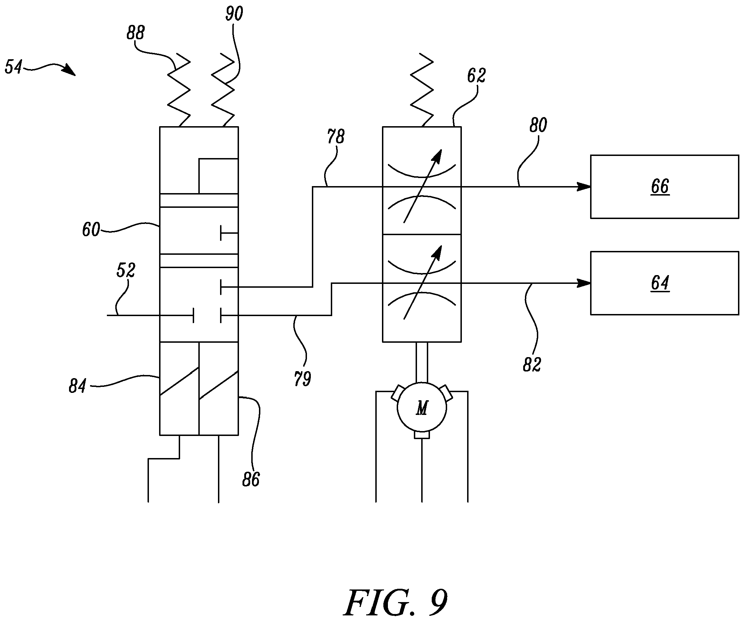

In an alternative version of the second embodiment, as shown in **Figure 9****,** the pilot and mains isolation valves are controlled electronically by separate solenoids 84,86. The two solenoids 84,86 are electrically isolated from one another. The control system can be arranged such that the mains solenoid 86 can only be opened once the pilot solenoid 84 is open, to ensure that fuel flow to the first inter-valve connection 78 only occurs when fuel flow to the pilot fuel conduit 82 in the staging valve 62 is also occurring. In this case, when the pilot solenoid 84 is powered, fuel can flow down the second inter-valve connection 79 to the pilot fuel conduit 82 in the staging valve 62. With the pilot 84 and mains 86 solenoids powered, fuel can also flow down the first inter-valve connection 78 to the mains fuel conduit 80 in the staging valve 62. The isolation valve 60 can comprise separate pilot 88 and mains 90 springs, which push against the pilot 84 and mains 86 solenoids, which improves the definition of the midposition of the valve, i.e. when fuel is only being supplied to the pilot fuel injector 64. The pilot spring 88 of the pilot solenoid may be relatively weak, similar to a known hydro-mechanical Weight Distributor Valve with the force equivalent of a few psi of fuel pressure. The mains spring 90 of the mains solenoid 86 may be relatively strong, comparable to those used in known Fuel Scheduling Valves with the force equivalent of between 20 and 200 psi (13,79 and 137,90 kPa) of fuel pressure. Alternatively, a single spring providing different ranges of force against both solenoids 84, 86 could be used.

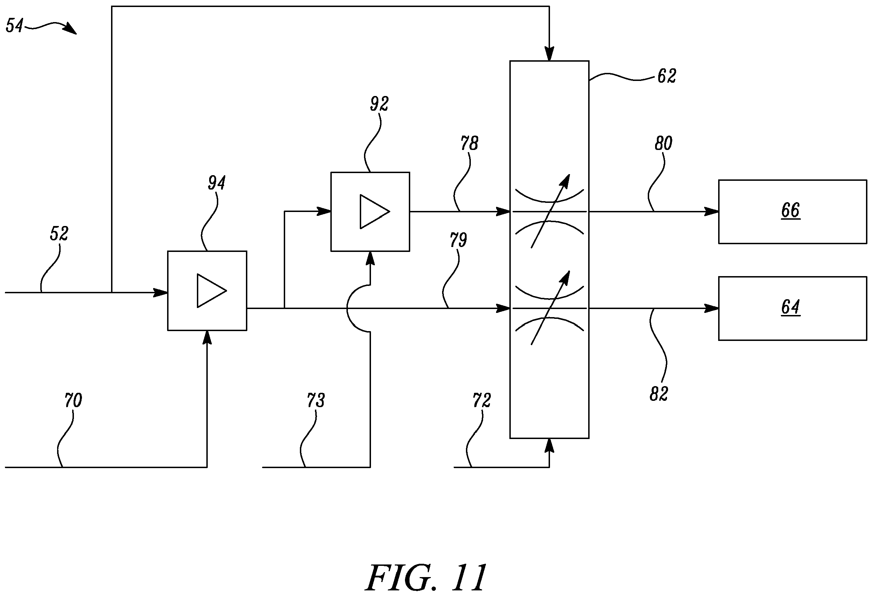

**Figure 10** shows a third embodiment, where the isolation valve has been split into separate mains isolation 92 and pilot isolation 94 valves. The isolation valves 92, 94 are arranged in series, so that the inlet flow for the mains isolation valve 92 is sourced from an offshoot of the outlet flow of the pilot isolation valve 94. This arrangement has the feature that fuel flow to the first inter-valve connection 78 (via mains isolation valve 92) can only occur when fuel is first flowing to the second inter-valve connection 79. The actuation of the valves 92, 94, 62 may be sourced from the same control manifold 70 as shown, or from separate first 70, second 72, and third 73 control manifolds, as shown in **Figure 11****,** which in all other respects is identical to Figure 10. If the same control manifold 70 is used, the opening pressures of the two isolation valves 92, 94 may be selected so that the pilot isolation valve 94 opens at a lower control pressure than the mains isolation valve 92.

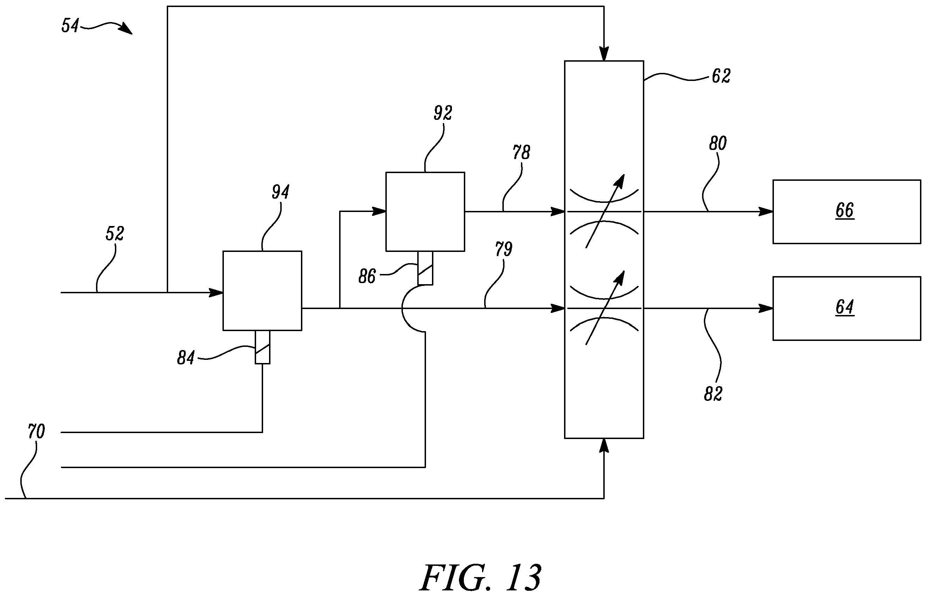

In an equivalent design (see **Figure 13**), the isolation valves may be controlled by electronic means similar to those of Figure 9. A pilot solenoid 84 and a mains solenoid 86 may be arranged with fluid connections in series, such that the fuel arrives at the first isolation valve 94 before the fuel flow is split between the second inter-valve connection 79 and a connection to the mains isolation valve 92, with the mains isolation valve controlling fuel flow only to the mains fuel conduit 80 within the staging valve 62. In this design, if the pilot solenoid 84 is deactivated (i.e. left open), the mains solenoid 86 can be used to restrict fuel flow to the mains fuel injector 66, independent of the staging valve setting. This provides additional redundancy in some failure scenarios. The profile of the pilot fuel conduit 82 within the staging valve 62 prevents excessive fuel flow to the pilot fuel injector 64 in this state.

The separation of the mains isolation valve 92 from the pilot isolation valve 94 and the staging valve 62 also allows the mains flow isolation valve 92 to be opened prior to the opening of the mains fuel conduit 80 at the staging valve 62. Doing this during Pilot fuel injector only operation allows the first inter-valve connection 78 to be filled with fuel in advance of the mains conduit 80 of the staging valve 62 being opened, such that, when a demand for engine acceleration is made, the amount of time required to supply fuel to the mains fuel injector 66 is decreased. Go-Around and Terrain Warning are particular conditions where this function may be most useful.

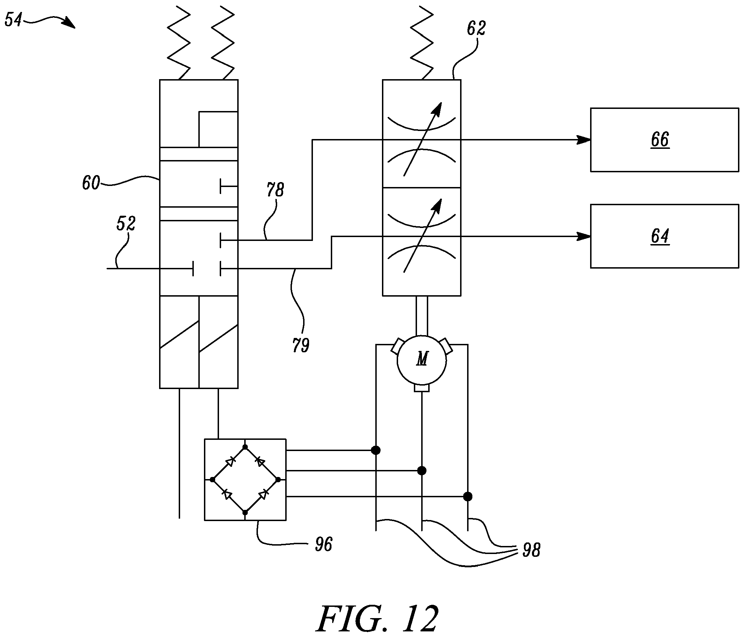

In a fourth embodiment, shown in **Figure 12****,** the isolation valve 60 and staging valve 62 are coupled to a valve control module 96. By comparison with the arrangement shown in Figure 9, this arrangement has the advantage of reducing the total amount of cabling required to control the two valves 60, 62, thus reducing weight and cost. In this example, a bridge rectifier function 96 is shown. The bridge rectifier rectifies the three motor control lines 98 to provide a DC solenoid drive, eliminating the need for a separate drive in the control unit. It will be appreciated that any suitable type of valve control module can be utilised in this system.

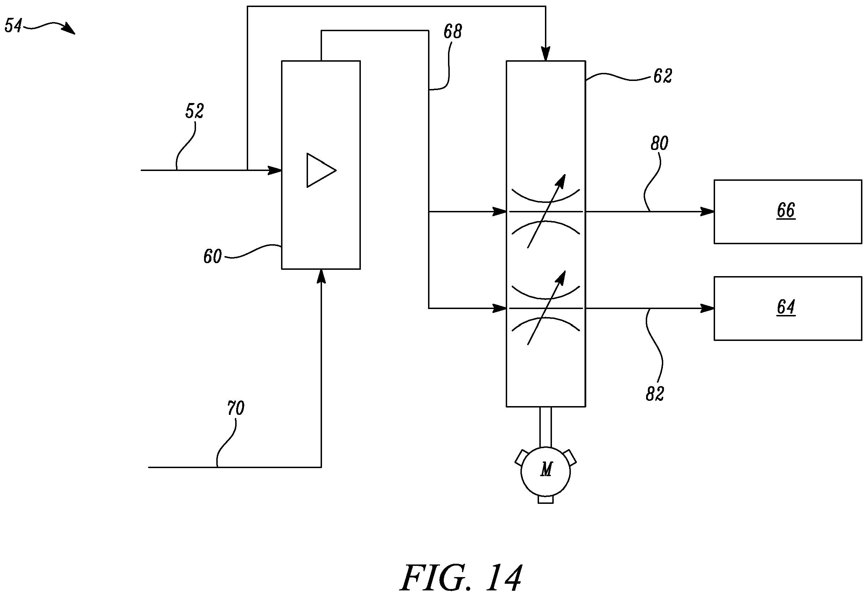

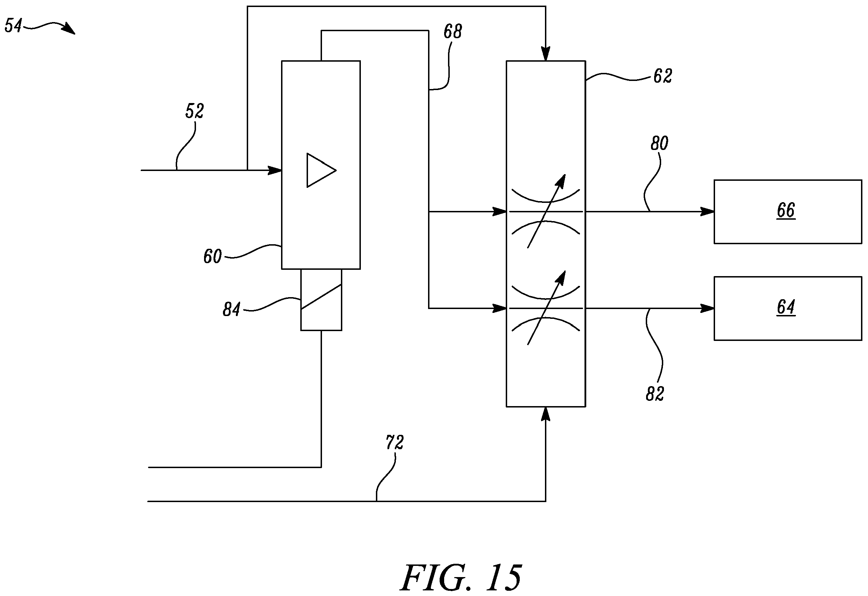

It will be appreciated that the two means of control, pressure and electronic, are by no means mutually exclusive, and that it is also possible to combine the types of valve control described here in a single burner head 54. For example, it is possible to use a control manifold 70, 73 to control by pressure the opening and closing of the isolation valve 60, 94 of any one of the preceding burner heads, and an electric motor to control the staging valve 62, as shown in the unclaimed embodiment of **Figure 14****.** Equally, a control manifold 72 could be used to control the staging valve 62 of any one of the preceding burner heads, and an electric motor or solenoid could be used to control the isolation valve 60, 94, an example of which is shown in the unclaimed embodiment of **Figure 15****.**

## Claims

1. A burner head (54) for a fuel manifold (50), the burner head comprising:
a mains fuel injector (66);
a pilot fuel injector (64);
a fuel source (52);
a first isolation valve (60, 94) connected to the fuel source;
a staging valve (62), the staging valve being connected to the first isolation valve (60, 94), and the staging valve (62) having a mains fuel conduit (80) connected to the mains fuel injector (66) and a pilot fuel conduit (82) connected to the pilot fuel injector (64); and
a second isolation valve (92), the second isolation valve being in series between the first isolation valve (94) and the mains fuel conduit (80) of the staging valve (62);
wherein the first isolation valve (60, 94) and the staging valve (62) are connected in series, such that fuel from the fuel source (52) must pass through the first isolation valve (60, 94) before arriving at the staging valve (62);
the burner head being **characterised in that** the force required to open the first isolation valve (94) is different to the force required to open the second isolation valve (92).

2. The burner head (54) of claim 1, wherein the first isolation valve (60) is controlled by a solenoid (74), and the staging valve is controlled by an electric motor (76).

3. The burner head (54) of claim 2, wherein the second isolation valve (92) is controlled by a solenoid (86).

4. The burner head (54) of claim 3, further comprising a valve control module (96), the valve control module being coupled to the first and second isolation valves 60, 92) and the staging valve (62).

5. The burner head (54) of claim 1, wherein the first isolation valve (60, 94) and the staging valve (62) are pressure valves.

6. The burner head (54) of claim 1, wherein the second isolation valve (92) is a pressure valve.

7. The burner head (54) of claim 1, wherein the force required to open the first isolation valve (94) is less than the force required to open the second isolation valve (92).

8. The burner head (54) of claim 7, wherein a single spring is used to provide different forces against the first (94) and second (92) isolation valves.

9. The burner head (54) of any one of claims 1, 5, 6, 7 and 8, wherein the first isolation valve (94) is connected to a first control flow source (70) and the staging valve is connected to a second control flow source (72).

10. The burner head (54) of any one of claims 1, 6, 7 and 8, wherein the second isolation valve (92) is connected to a third control flow source (73).

11. The burner head (54) of claim 1, wherein at least one of the isolation valve (60, 94) and the staging valve (62) is an electronic valve, and wherein at least one of the isolation valve (60, 94) and the staging valve (62) is a pressure valve.

12. A fuel manifold (50) for a gas turbine engine, the fuel manifold comprising one or more burner heads (54) according to any preceding claim.

13. A gas turbine engine (10) comprising a fuel manifold (50) comprising one or more burner heads (54) according to any one of claims 1 to 11.

## Patentansprüche

1. Brennerkopf (54) für einen Kraftstoffverteiler (50), wobei der Brennerkopf Folgendes umfasst:
eine Netzkraftstoffeinspritzdüse (66);
eine Pilot-Kraftstoffeinspritzdüse (64);
eine Kraftstoffquelle (52);
ein erstes Absperrventil (60, 94), das mit der Kraftstoffquelle verbunden ist;
ein Stufenventil (62), wobei das Stufenventil mit dem ersten Absperrventil (60, 94) verbunden ist und das Stufenventil (62) eine Netzkraftstoffleitung (80), die mit der Netzkraftstoffeinspritzdüse (66) verbunden ist, und eine Pilot-Kraftstoffleitung (82) aufweist, die mit der Pilot-Kraftstoffeinspritzdüse (64) verbunden ist; und
ein zweites Absperrventil (92), wobei das zweite Absperrventil in Reihe zwischen dem ersten Absperrventil (94) und der Netzkraftstoffleitung (80) des Stufenventils (62) ist;
wobei das erste Absperrventil (60, 94) und das Stufenventil (62) in Reihe geschaltet sind, sodass Kraftstoff von der Kraftstoffquelle (52) das erste Absperrventil (60, 94) passieren muss, bevor es an dem Stufenventil (62) ankommt;
wobei der Brennerkopf **dadurch gekennzeichnet ist, dass** sich die zum Öffnen des ersten Absperrventils (94) erforderliche Kraft von der zum Öffnen des zweiten Absperrventils (92) erforderlichen Kraft unterscheidet.

2. Brennerkopf (54) nach Anspruch 1, wobei das erste Absperrventil (60) durch einen Elektromagneten (74) gesteuert wird und das Stufenventil durch einen Elektromotor (76) gesteuert wird.

3. Brennerkopf (54) nach Anspruch 2, wobei das zweite Absperrventil (92) durch einen Elektromagneten (86) gesteuert wird.

4. Brennerkopf (54) nach Anspruch 3, ferner umfassend ein Ventilsteuermodul (96), wobei das Ventilsteuermodul an das erste und zweite Absperrventil (60, 92) und das Stufenventil (62) gekoppelt ist.

5. Brennerkopf (54) nach Anspruch 1, wobei das erste Absperrventil (60, 94) und das Stufenventil (62) Druckventile sind.

6. Brennerkopf (54) nach Anspruch 1, wobei das zweite Absperrventil (92) ein Druckventil ist.

7. Brennerkopf (54) nach Anspruch 1, wobei die zum Öffnen des ersten Absperrventils (94) erforderliche Kraft geringer ist als die zum Öffnen des zweiten Absperrventils (92) erforderliche Kraft.

8. Brennerkopf (54) nach Anspruch 7, wobei eine einzige Feder verwendet wird, um unterschiedliche Kräfte an dem ersten (94) und zweiten (92) Absperrventil bereitzustellen.

9. Brennerkopf (54) nach einem der Ansprüche 1, 5, 6, 7 und 8, wobei das erste Absperrventil (94) mit einer ersten Steuerstromquelle (70) verbunden ist und das Stufenventil mit einer zweiten Steuerstromquelle (72) verbunden ist.

10. Brennerkopf (54) nach einem der Ansprüche 1, 6, 7 und 8, wobei das zweite Absperrventil (92) mit einer dritten Steuerstromquelle (73) verbunden ist.

11. Brennerkopf (54) nach Anspruch 1, wobei mindestens eines von dem Absperrventil (60, 94) und dem Stufenventil (62) ein elektronisches Ventil ist und wobei mindestens eines von dem Absperrventil (60, 94) und dem Stufenventil (62) ein Druckventil ist.

12. Kraftstoffverteiler (50) für ein Gasturbinentriebwerk, wobei der Kraftstoffverteiler einen oder mehrere Brennerköpfe (54) nach einem der vorhergehenden Ansprüche umfasst.

13. Gasturbinentriebwerk (10), umfassend einen Kraftstoffverteiler (50), der einen oder mehrere Brennerköpfe (54) nach einem der Ansprüche 1 bis 11 umfasst.

## Revendications

1. Tête de brûleur (54) pour un collecteur de carburant (50), la tête de brûleur comprenant :
un injecteur de carburant principal (66) ;
un injecteur de carburant pilote (64) ;
une source de carburant (52) ;
une première soupape d'isolement (60, 94) raccordée à la source de carburant ;
une soupape d'étagement (62), la soupape d'étagement étant raccordée à la première soupape d'isolement (60, 94), et la soupape d'étagement (62) comportant un conduit de carburant principal (80) raccordé à l'injecteur de carburant principal (66) et un conduit de carburant pilote (82) raccordé à l'injecteur de carburant pilote (64) ; et
une seconde soupape d'isolement (92), la seconde soupape d'isolement étant en série entre la première soupape d'isolement (94) et le conduit de carburant principal (80) de la soupape d'étagement (62) ;
ladite première soupape d'isolement (60, 94) et ladite soupape d'étagement (62) étant raccordées en série, de sorte que le carburant en provenance de la source de carburant (52) doit passer à travers la première soupape d'isolement (60, 94) avant d'arriver à la soupape d'étagement (62) ;
la tête de brûleur étant **caractérisée en ce que** la force requise pour ouvrir la première soupape d'isolement (94) est différente de la force requise pour ouvrir la seconde soupape d'isolement (92).

2. Tête de brûleur (54) de la revendication 1, ladite première soupape d'isolement (60) étant commandée par un solénoïde (74), et ladite soupape d'étagement étant commandée par un moteur électrique (76).

3. Tête de brûleur (54) de la revendication 2, ladite seconde soupape d'isolement (92) étant commandée par un solénoïde (86).

4. Tête de brûleur (54) de la revendication 3, comprenant en outre un module de commande (96) de soupape, le module de commande de soupape étant couplé aux première et seconde soupapes d'isolement (60, 92) et à la soupape d'étagement (62).

5. Tête de brûleur (54) de la revendication 1, ladite première soupape d'isolement (60, 94) et ladite soupape d'étagement (62) étant des soupapes de pression.

6. Tête de brûleur (54) de la revendication 1, ladite seconde soupape d'isolement (92) étant une soupape de pression.

7. Tête de brûleur (54) de la revendication 1, ladite force requise pour ouvrir la première soupape d'isolement (94) étant inférieure à la force requise pour ouvrir la seconde soupape d'isolement (92).

8. Tête de brûleur (54) de la revendication 7, un seul ressort étant utilisé pour fournir des forces différentes contre les première (94) et seconde (92) soupapes d'isolement.

9. Tête de brûleur (54) de l'une quelconque des revendications 1, 5, 6, 7 et 8, ladite première soupape d'isolement (94) étant raccordée à une première source d'écoulement de commande (70) et ladite soupape d'étagement étant raccordée à une seconde source d'écoulement de commande (72).

10. Tête de brûleur (54) de l'une quelconque des revendications 1, 6, 7 et 8, ladite seconde soupape d'isolement (92) étant raccordée à une troisième source d'écoulement de commande (73).

11. Tête de brûleur (54) de la revendication 1, au moins l'une de la soupape d'isolement (60, 94) et de la soupape d'étagement (62) étant une soupape électronique, et au moins l'une de la soupape d'isolement (60, 94) et de la soupape d'étagement (62) étant une soupape de pression.

12. Collecteur de carburant (50) pour un moteur à turbine à gaz, le collecteur de carburant comprenant une ou plusieurs têtes de brûleur (54) selon une quelconque revendication précédente.

13. Moteur à turbine à gaz (10) comprenant un collecteur de carburant (50) comprenant une ou plusieurs têtes de brûleur (54) selon l'une quelconque des revendications 1 à 11.
